# EUROPEAN PATENT SPECIFICATION

(11) **EP 3 354 968 B1**
(45) Date of publication and mention of the grant of the patent: **05.01.2022**
(21) Application number: 17154077.6
(22) Date of filing: 31.01.2017
(51) Int. Cl.: B60Q 1/00, B60Q 1/26, F21S 41/147, F21S 41/14, F21S 41/675

(54) **LIGHTING MODULE AND LIGHTING DEVICE FOR VEHICLES HAVING WELCOME FUNCTION**
BELEUCHTUNGSMODUL UND BELEUCHTUNGSVORRICHTUNG FÜR FAHRZEUGE MIT WILLKOMMENSFUNKTION
MODULE D'ÉCLAIRAGE ET DISPOSITIF D'ÉCLAIRAGE POUR VÉHICULES AYANT UNE FONCTION DE BIENVENUE

(43) Date of publication of application: 01.08.2018
(73) Proprietor: Marelli Automotive Lighting Italy S.p.A., 10078 Venaria Reale (TO) (IT); PSA Automobiles SA, 78300 Poissy (FR)
(72) Inventor: RODRIGUEZ ORTEGA, Pablo, 10078 Venaria Reale (IT); RENARD, Stephanie, 10078 Venaria Reale (IT); ZATTONI, Sergio, 10078 Venaria Reale (IT); GONCALVES, Whilk Marcelino, 78140 Velizy Villacoublay (FR); LE DALL, Christophe, 78140 Velizy Villacoublay (FR); BORE, Michael, 78140 Velizy Villacoublay (FR)
(74) Representative: Plebani, Rinaldo

(56) References cited:
- EP-A1- 1 489 351
- DE-A1- 19 811 961
- DE-C- 720 816
- JP-A- H03 164 338
- US-B1- 6 404 132

## Description

### Technical field of the invention

The present invention relates to a lighting device equipped with one lighting module able to provide selectively, other than one or more selected optical functions (e.g. DRL - Daytime Running Light), also a welcome function.

### Technical Background

Lighting devices for vehicles provided with multiple functions, e.g. owing to rotating elements, like a rotating reflector, are known in the art.

EP2957822 discloses a lighting device including a fixed reflector and a fixed light source; the light source is aligned with an axis, around which a couple of opposite screens may rotate under the action of a motor actuator; the two screens embody two lenses, e.g. one provided with prisms and one neutral, in order to change the light distribution provided by the light source and the reflector when each of the screens is selectively rotated in front of the reflector.

EP2902701 discloses a device wherein the light source is a LED and the reflector consists of a rotating support having two opposite faces, one constituting the reflector and the other realizing a second function, e.g. an aspect function; a fixed motor rotates the support with respect to the fixed light source in order to bring selectively the two faces on the front side of the device facing toward the direction of motion of the vehicle; the support also bears at its opposite faces two light guides operatively associated with a second LED.

The lighting devices of the prior art are generally too complex and expensive in order to provide a "secondary" (from the point of view of the vehicle safety) but nevertheless no less important (from the point of view of the marketing) optical function like the so called welcome light function, i.e. the switching on and blinking of one or more lights usually integrated in the headlamps of the vehicle when, e.g., the vehicle locks are opened, e.g. by means of a remote control.

In the known lighting devices, therefore, one or more lights or lighting modules are merely switched on, maybe for a short time, and merely to generate a static light distribution, which moreover correspond to the normal lighting function assigned to the light/lighting module, e.g. position light, DRL, etc.. JPH03164338 shows a lighting device according to the preamble of claim 1.

### Summary of the invention

The object of the present invention is to provide a lighting module for equipping a lighting device for vehicles that is compact, simple and cost-effective in construction and highly reliable, while ensuring at the same time a welcome light function, which has a light distribution different from that one the lighting module is normally designed to provide for.

According to the invention, a lighting module and a device for vehicles are provided having the features set out in the appended claims.

### Brief description of the drawings

Further features and advantages of the present invention will become more apparent from the following description of one non-limiting embodiment thereof, made with reference to the figures in the accompanying drawings, in which:
- figure 1 shows schematically a front elevation view of a lighting device for a vehicle, with parts removed for simplicity, provided with a lighting module according to the invention as a main lighting module and further provided with secondary lighting modules arranged side by side with the main lighting module;
- figure 2 shows schematically the lighting module of the invention as provided in the lighting device of figure 1; and
- figure 3 shows schematically the light distribution which can be obtained by activating a welcome light function in the lighting device of figure 1.

### Detailed description

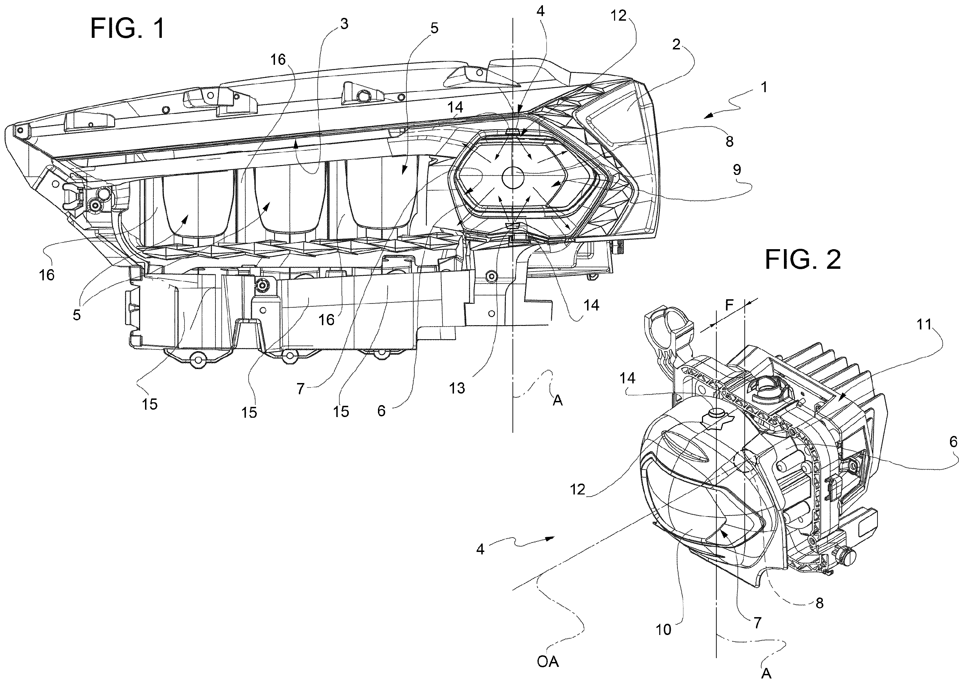

With reference to figure 1, reference numeral 1 indicates as a whole a lighting device for vehicles consisting, in the non-limiting embodiment shown, in a vehicle headlight, which is only in part and only schematically shown. It is however to be intended that what will be described can be applied to any vehicle lighting device.

The lighting device 1 comprises a generally cup-shaped housing 2 designed to be mounted on a vehicle, known and shown only in part for sake of simplicity. Housing 2 is made of synthetic plastic material by injection molding and has a front inlet opening 3 in use facing opposite to the vehicle and towards a driving or march direction of the vehicle, closed by a transparent cover, known and not shows for sake of simplicity.

Housing 2 carries at the interior thereof at least one main lighting module 4 and, in the preferred embodiment shown, a plurality, preferably three, of secondary lighting modules 5, which modules 4,5 are all visible from the outside through the inlet opening 3, being arranged side by side just facing it.

The lighting module 4 is designed to equip a lighting device for vehicles like lighting device 1, preferably as a main lighting module of the lighting device 1, and comprises (figures 1 and 2) a casing 6 having a front opening 7, at least one first light source 8 arranged within the casing 6 and facing the front opening 7, at least one first reflector 9 arranged within the casing 6 facing the front opening 7 from behind the first light source 8, and an optical lens 10 ("optical" means herein and below that the lens 10 is optically active, i.e. is able to shape the light beam emitted by light source 8 and reflected forward by reflector 9) .

Lens 10 closes the front opening 7 of the casing 6 and in the embodiment shown the casing 6 is essentially frame shaped and presents the front opening 7 and a rear opening (to access the reflector 9 and the light source 8) closed by a heat dispersion block 11, of a type known in the art. Preferably the light source 8 is constituted by a LED or by an array of LEDs bore by the heat dispersion block 11.

The light source 8 and the reflector 9 are configured in order to generate along an optical axis OA of the lighting module 4 a shaped light beam (not shown) realizing a first optical function of the module 4, e.g. a cross-beam light, a DLR light, a fog light, etc..

According to one aspect of the present invention, the lighting module 4 further comprises at least one second light source 12 which is arranged at a side of the front opening 7, so as not to face it; moreover, the second light source is facing laterally the first reflector 9 and is operatively associated therewith such that respective light rays (indicated by the arrows in figure 1) emitted by the second light source 12 are scattered forward through the front opening 7 and the lens 10 by the first reflector 9.

The lighting module 4 further comprises at least one third light source 13 (not visible in figure 2), which is arranged at a side of the front opening 7 as well, and facing the second light source 12, so as to be aligned therewith along an axis A which is transverse to the first light source 8 and to the optical axis OA. The latter passes through the light source 8, substantially perpendicular to the lens 10.

In this manner, respective light rays emitted by the third light source 13 and represented by arrows too in figure 1, are also scattered forward by the first reflector 9.

By configuring in a suitable manner the reflector 9 and the lens 10 it is therefore possible to add in a simple manner a second lighting function to the lighting module 4 other than the lighting function it has been designed for.

Since the light rays generated by the light sources 12,13 are scattered, the light beam emitted by the module 4 when the light source 8 is switched off and the light sources 12 and/or 13 are switched on is soft, diffused and not dazzling, so owing to the additional light sources 12,13 the lighting module 4 carries out in a very reliable manner, according to the invention, a welcome light function, other than its own normal optical function, which is carried out when the light sources 12,13 are switched off and the light source 8 is switched on.

The second and third light sources 12,13 are housed within lateral bulged portions 14 of the casing 6 (figure 2) arranged upwards and downwards the first reflector 9 and projecting outwards from the casing 6 at the top and bottom thereof.

The second and third light sources 12,13 are LEDs and preferably are RGB LEDs.

In order to provide the desired optical function, the at least one second light source 12, both light sources 12,13 in the example shown, is/are arranged spaced apart from the first light source 8 towards the lens 10 and to such an extent to be arranged between the first reflector 9 and the lens 10. In particular, axis A on which both light sources 12,13 are aligned is arranged axially offset (along optical axis OA) from the light source 8 of a quantity F, selected in the design stage.

The three lighting modules 5 are identical to each other and are arranged, as already described, side by side to one another and to the main lighting module 4 and facing the inlet opening 3.

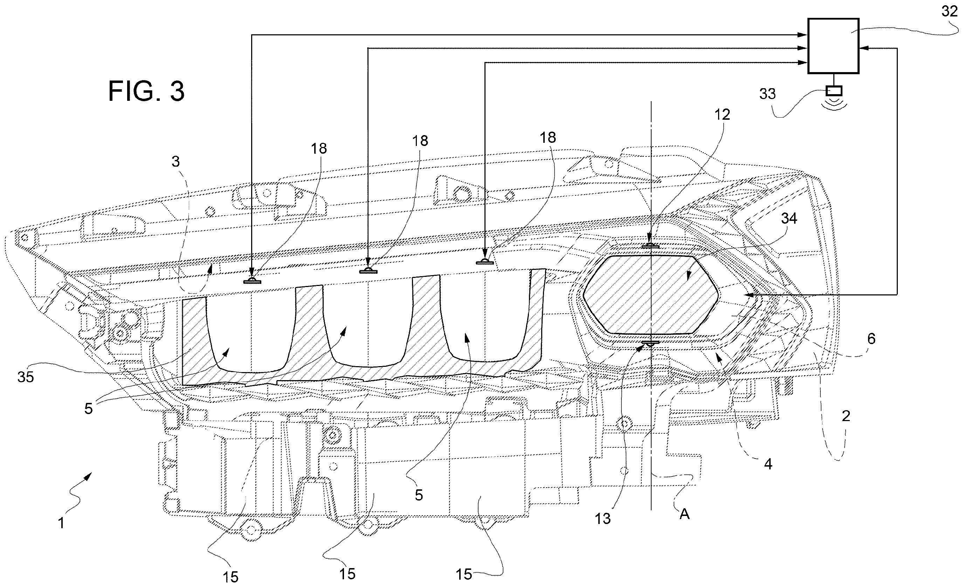

According to one aspect of the invention, the main lighting module 4 is arranged stationary within the housing 2, while the secondary lighting modules 5 are arranged in the housing 2 rotatable under the action of respective actuators 15; moreover, behind each the secondary module 5 is provided a respective second reflector 16, which is arranged stationary within the housing 2. Each secondary lighting module 5 may be switched on/off in order to provide/not provide a selected lighting function it has been designed for. Moreover, according to a further aspect of the invention, each module 5 comprises a stationary fourth light source 18, e.g. constituted by an RGB LED (figure 3), which is operatively associated to a respective second reflector 16.

The lighting device 1 according to the invention further comprises a control unit 32 (figure 3) configured to switch on and off the at least the one second light source 12, in the example shown both light sources 12,13, of the main lighting module 4 and, preferably, to switch on and off the fourth light sources 18 of each module 5 and to simultaneously rotate the secondary lighting modules 5 while keeping them switched off, so in order not to perform their designed optical function.

The control unit 32 is preferably connected with a remote control receiver 33.

When only the lighting device 4 is present in the lighting device 1, the control unit 32 is configured to activate selectively one only or both of the LED light sources 12,13 while keeping switched off the light source 8; the LED light sources 12,13 may be switched on/off all together or separately and in a time sequence and, if they are RGB LEDs the control unit 32 may also select a suitable color or combination of colors.

The result of the switching on of the light sources 12,13 is shown in figure 3, where the light distribution and aesthetic appearance of the lighting device 1 obtainable when the control unit 32 activates the welcome light function is represented as a front illuminated area 34, shown as an hatched area.

When also one or more lighting modules 5 are present in the lighting device 1, the welcome light function which may be implemented by the control unit 32 is more complex and it is also shown in figure 3 schematically.

To realize the welcome light function, also the light sources 18 are switched on, so that the light rays they generate are reflected by reflectors 16, while the modules 5 are maintained switched off, i.e. not illuminated.

In this case too the result of the switching on of the light sources 18 is shown in figure 3 as a front illuminated area 35, shown as an hatched area too with a different hatching.

So, the whole light distribution and aesthetic appearance of the lighting device 1 obtainable when the control unit 32 activates the welcome light function of both the module 4 and of the modules 5 is represented in figure 3 by the hatched areas 34,35, i.e. the areas of the device 1 which result to be illuminated by the light source 18 of each module 5 and by the light source 12 and/or 13 of the module 4.

Finally, when the modules 5 are rotating modules arranged side by side and spaced apart laterally to an extent sufficient to allow their free rotation independently of one another, by simultaneously activating by means of the control unit 32 their rotation without illuminating them, the illuminated area 35 may be varied in width and intensity so that the welcome light effect appears to be animated instead of static.

All the aims of the invention are therefore accomplished.

## Claims

1. A lighting module (4) designed to equip a lighting device (1) for vehicles, preferably as a main lighting module of the lighting device, comprising a casing (6) having a front opening (7), at least one first light source (8) arranged within the casing (6) and facing the front opening, at least one first reflector (9) arranged within the casing facing the front opening from behind the first light source (8), and a lens (10) closing the front opening of the casing; wherein it further comprises at least one second light source (12) which is arranged at a side of the front opening (7) so as not to face it, the second light source facing laterally the first reflector (9) and being operatively associated therewith such as respective light rays emitted by the second light source (12) are scattered forward through the front opening (7) and the lens (10) by the first reflector (9); **characterized in that** it further comprises at least one third light source (13) which is arranged at a side of the front opening (7) and facing said second light source (12) so as to be aligned therewith along an axis (A) which is transverse to the first light source (8), so that respective light rays emitted by the third light source (13) are also scattered forward by the first reflector (9).

2. Lighting module according to claim 1, **characterized in that** the second and third light sources (12,13) are housed within lateral bulged portions (14) of the casing (6) arranged upwards and downwards the first reflector (9) and projecting outwards from the casing at the top and bottom thereof.

3. Lighting module according to claim 1 or 2, **characterized in that** said second and third light sources (12, 13) are LEDs.

4. Lighting module according to claim 3, **characterized in that** said second and third light sources (12, 13) are RGB LEDs.

5. Lighting module according to anyone of the preceding claims, **characterized in that** the at least one second light source (12) is arranged spaced apart from the first light source (8) towards the lens (10) and to such an extent to be arranged between the first reflector (9) and the lens (10).

6. Lighting device (1) for a vehicle such as a headlight or a headlamp, **characterized in that** it comprises a cup-shaped housing (2) designed to be mounted on a vehicle body and having a front inlet opening (3) facing in use a forward march direction of the vehicle and at least one lighting module (4) according to anyone of the preceding claims arranged as one main lighting module of the lighting device within said housing, facing the front inlet opening (3) .

7. Lighting device (1) for a vehicle according to claim 6, **characterized in that** it further comprises a plurality of secondary lighting modules (5) arranged side by side to one another and to the main lighting module (4) and facing the inlet opening (3); the main lighting module (4) being arranged stationary within the housing (2), while the secondary lighting modules (5) being arranged in the housing rotatable under the action of respective actuators (15); behind the secondary lighting modules (5) being provided respective second reflectors (16), which are arranged stationary within the housing (2) and each secondary lighting module comprising a stationary fourth light source (18) which is operatively associated to a respective second reflector (16) .

8. Lighting device according to claim 7, **characterized in that** the fourth light sources (18) are RGB LEDs.

9. Lighting device according to anyone of the preceding claims 7 or 8, **characterized in that** it further comprises a control unit (32) configured to switch on and off the at least one second light source (12) of the main lighting module and, preferably, to switch on and off the fourth light sources (18) and to simultaneously rotate the secondary lighting modules (5) while keeping them switched off.

10. Lighting device according to claim 9, **characterized in that** the control unit (32) is connected with a remote control receiver (33).

11. Vehicle provided with a lighting device (1) according to claim 6.

## Patentansprüche

1. Beleuchtungsmodul (4), das zum Ausrüsten einer Beleuchtungsvorrichtung (1) für Fahrzeuge ausgelegt ist, vorzugsweise als ein Hauptbeleuchtungsmodul der Beleuchtungsvorrichtung, umfassend ein Gehäuse (6) mit einer Frontöffnung (7), wenigstens eine erste Lichtquelle (8), die innerhalb des Gehäuses (6) angeordnet ist und der Frontöffnung zugewandt ist, wenigstens einen ersten Reflektor (9), der innerhalb des Gehäuses angeordnet ist und von der Rückseite der ersten Lichtquelle (8) ausgehend der Frontöffnung zugewandt ist, und eine Linse (10), die die Frontöffnung des Gehäuses verschließt; ferner wenigstens eine zweite Lichtquelle (12) umfassend, die an einer Seite der Frontöffnung (7) so angeordnet ist, dass sie dieser nicht zugewandt ist, wobei die zweite Lichtquelle dem ersten Reflektor (9) seitlich zugewandt ist und diesem operativ zugeordnet ist, so dass entsprechende von der zweiten Lichtquelle (12) emittierte Lichtstrahlen von dem ersten Reflektor (9) nach vorne durch die vordere Öffnung (7) und die Linse (10) gestreut werden;
**dadurch gekennzeichnet, dass** es ferner wenigstens eine dritte Lichtquelle (13) umfasst, die an einer Seite der vorderen Öffnung (7) angeordnet ist und der zweiten Lichtquelle (12) zugewandt ist, so dass sie mit dieser entlang einer Achse (A) fluchtet, die quer zu der ersten Lichtquelle (8) verläuft, so dass die jeweiligen von der dritten Lichtquelle (13) emittierten Lichtstrahlen ebenfalls von dem ersten Reflektor (9) nach vorne gestreut werden.

2. Beleuchtungsmodul nach Anspruch 1, **dadurch gekennzeichnet, dass** die zweite und die dritte Lichtquelle (12, 13) in seitlichen Ausbuchtungen (14) des Gehäuses (6) untergebracht sind, die oberhalb und unterhalb des ersten Reflektors (9) angeordnet sind und an der Oberseite und der Unterseite des Gehäuses nach außen hervorstehen.

3. Beleuchtungsmodul nach Anspruch 1 oder 2, **dadurch gekennzeichnet, dass** die zweite und die dritte Lichtquelle (12, 13) LEDs sind.

4. Beleuchtungsmodul nach Anspruch 3, **dadurch gekennzeichnet, dass** die zweite und die dritte Lichtquelle (12, 13) RGB-LEDs sind.

5. Beleuchtungsmodul nach einem der vorangehenden Ansprüche, **dadurch gekennzeichnet, dass** die wenigstens eine zweite Lichtquelle (12) in einem solchen Ausmaß von der ersten Lichtquelle (8) in Richtung zu der Linse (10) beabstandet angeordnet ist, dass sie zwischen dem ersten Reflektor (9) und der Linse (10) angeordnet ist.

6. Beleuchtungsvorrichtung (1) für ein Fahrzeug, wie beispielsweise ein Scheinwerfer, **dadurch gekennzeichnet, dass** sie ein schalenförmiges Gehäuse (2) umfasst, das dazu ausgelegt ist, an einer Fahrzeugkarosserie montiert zu werden, und das eine vordere Einlassöffnung (3) aufweist, die im Gebrauch einer Vorwärtsfahrtrichtung des Fahrzeugs zugewandt ist, und wenigstens ein Beleuchtungsmodul (4) nach einem der vorangehenden Ansprüche, das als ein Hauptbeleuchtungsmodul der Beleuchtungsvorrichtung innerhalb des Gehäuses angeordnet ist und der vorderen Einlassöffnung (3) zugewandt ist.

7. Beleuchtungsvorrichtung (1) für ein Fahrzeug nach Anspruch 6, **dadurch gekennzeichnet, dass** sie ferner mehrere sekundäre Beleuchtungsmodule (5) umfasst, die nebeneinander und neben dem Hauptbeleuchtungsmodul (4) angeordnet sind und der Einlassöffnung (3) zugewandt sind; wobei das Hauptbeleuchtungsmodul (4) unbeweglich innerhalb des Gehäuses (2) angeordnet ist, während die sekundären Beleuchtungsmodule (5) in dem Gehäuse unter der Wirkung entsprechender Aktoren (15) drehbar angeordnet sind; wobei hinter den sekundären Beleuchtungsmodulen (5) jeweils zweite Reflektoren (16) vorgesehen sind, die unbeweglich innerhalb des Gehäuses (2) angeordnet sind, und wobei jedes sekundäre Beleuchtungsmodul eine unbewegliche vierte Lichtquelle (18) umfasst, die operativ einem jeweiligen zweiten Reflektor (16) zugeordnet ist.

8. Beleuchtungsvorrichtung nach Anspruch 7, **dadurch gekennzeichnet, dass** die vierten Lichtquellen (18) RGB-LEDs sind.

9. Beleuchtungsvorrichtung nach einem der vorangehenden Ansprüche 7 oder 8, **dadurch gekennzeichnet, dass** sie ferner eine Steuereinheit (32) umfasst, die dazu konfiguriert ist, die wenigstens eine zweite Lichtquelle (12) des Hauptbeleuchtungsmoduls ein- und auszuschalten und, vorzugsweise, die vierten Lichtquellen (18) ein- und auszuschalten und gleichzeitig die sekundären Beleuchtungsmodule (5) zu drehen, während diese ausgeschaltet bleiben.

10. Beleuchtungsvorrichtung nach Anspruch 9, **dadurch gekennzeichnet, dass** die Steuereinheit (32) mit einem Fernbedienungsempfänger (33) verbunden ist.

11. Fahrzeug, das mit einer Beleuchtungsvorrichtung (1) nach Anspruch 6 ausgestattet ist.

## Revendications

1. Module d'éclairage (4) conçu pour équiper un dispositif d'éclairage (1) pour des véhicules, de préférence en tant que module d'éclairage principal du dispositif d'éclairage, comprenant un boîtier (6) ayant une ouverture avant (7), au moins une première source de lumière (8) agencée dans le boîtier (6) et faisant face à l'ouverture avant, au moins un premier réflecteur (9) agencé dans le boîtier faisant face à l'ouverture avant depuis l'arrière de la première source de lumière (8), et une lentille (10) fermant l'ouverture avant du boîtier ; dans lequel il comprend en outre au moins une deuxième source de lumière (12) qui est agencée au niveau d'un côté de l'ouverture avant (7) de manière à ne pas lui faire face, la deuxième source de lumière faisant face latéralement au premier réflecteur (9) et étant associée fonctionnellement à celui-ci de sorte que des rayons lumineux respectifs émis par la deuxième source de lumière (12) soient diffusés vers l'avant à travers l'ouverture avant (7) et la lentille (10) par le premier réflecteur (9) ; **caractérisé en ce qu'**il comprend en outre au moins une troisième source de lumière (13) qui est agencée au niveau d'un côté de l'ouverture avant (7) et faisant face à ladite deuxième source de lumière (12) de manière à être alignée sur celle-ci le long d'un axe (A) qui est transversal par rapport à la première source de lumière (8), de façon à ce que des rayons lumineux respectifs émis par la troisième source de lumière (13) soient également diffusés vers l'avant par le premier réflecteur (9).

2. Module d'éclairage selon la revendication 1, **caractérisé en ce que** les deuxième et troisième sources de lumière (12, 13) sont logées dans des parties bombées latérales (14) du boîtier (6) agencées vers le haut et vers le bas du premier réflecteur (9) et faisant saillie vers l'extérieur à partir du boîtier en haut et en bas de celui-ci.

3. Module d'éclairage selon la revendication 1 ou 2, **caractérisé en ce que** lesdites deuxième et troisième sources de lumière (12, 13) sont des DEL.

4. Module d'éclairage selon la revendication 3, **caractérisé en ce que** lesdites deuxième et troisième sources de lumière (12, 13) sont des DEL RVB.

5. Module d'éclairage selon l'une quelconque des revendications précédentes, **caractérisé en ce que** l'au moins une deuxième source de lumière (12) est agencée à l'écart de la première source de lumière (8) vers la lentille (10) et au point d'être agencée entre le premier réflecteur (9) et la lentille (10).

6. Dispositif d'éclairage (1) pour un véhicule tel qu'un phare ou un feu, **caractérisé en ce qu'**il comprend un boîtier (2) en forme de coupe conçu pour être monté sur une carrosserie de véhicule et ayant une ouverture d'entrée (3) avant faisant face en utilisation à une direction de marche avant du véhicule et au moins un module d'éclairage (4) selon l'une quelconque des revendications précédentes agencé en tant que module d'éclairage principal du dispositif d'éclairage dans ledit boîtier, faisant face à l'ouverture d'entrée (3) avant.

7. Dispositif d'éclairage (1) pour un véhicule selon la revendication 6, **caractérisé en ce qu'**il comprend en outre une pluralité de modules d'éclairage secondaires (5) agencés côte à côte les uns par rapport aux autres et au module d'éclairage principal (4) et faisant face à l'ouverture d'entrée (3) ; le module d'éclairage principal (4) étant agencé fixe dans le boîtier (2), tandis que les modules d'éclairage secondaires (5) étant agencés dans le boîtier rotatifs sous l'action d'actionneurs (15) respectifs ; à l'arrière des modules d'éclairage secondaires (5) étant fournis des seconds réflecteurs (16) respectifs, qui sont agencés fixes dans le boîtier (2) et chaque module d'éclairage secondaire comprenant une quatrième source de lumière (18) fixe qui est associée fonctionnellement à un second réflecteur (16) respectif.

8. Dispositif d'éclairage selon la revendication 7, **caractérisé en ce que** les quatrièmes sources de lumière (18) sont des DEL RVB.

9. Dispositif d'éclairage selon l'une quelconque des revendications précédentes 7 ou 8, **caractérisé en ce qu'**il comprend en outre une unité de commande (32) configurée pour allumer et éteindre l'au moins une deuxième source de lumière (12) du module d'éclairage principal et, de préférence, pour allumer et éteindre les quatrièmes sources de lumière (18) et pour faire tourner simultanément les modules d'éclairage secondaires (5) tout en les gardant éteints.

10. Dispositif d'éclairage selon la revendication 9, **caractérisé en ce que** l'unité de commande (32) est connectée à un récepteur de commande distant (33).

11. Véhicule doté d'un dispositif d'éclairage (1) selon la revendication 6.
